# EUROPEAN PATENT APPLICATION

(11) **EP 3 057 286 A1**
(43) Date of publication of application: **17.08.2016**
(21) Application number: 13895127.2
(22) Date of filing: 07.10.2013
(51) Int. Cl.: H04L 29/08

(54) **METHOD AND SYSTEM FOR CONFIGURING WEB CACHE MEMORY AND FOR PROCESSING REQUEST**

(71) Applicant: Telefonica Digital España, S.L.U., 28013 Madrid (ES)
(72) Inventor: GUIJARRO GUILLEN, David, E-08019 Barcelona (ES); YANG, Xiaoyuan, E-08019 Barcelona (ES); IVÁN LEVI, Martín, E-08019 Barcelona (ES); ASTIZ LEZAUN, Eguzki, E-08019 Barcelona (ES); GARCIA SANCHEZ MENDOZA, Armando Antonio, E-08019 Barcelona (ES); PANDO CAO, Arcandio, E-08019 Barcelona (ES); BURREL, Maite, E-08019 Barcelona (ES); CONEJERO OLESTI, David, E-08019 Barcelona (ES)
(74) Representative: Herrero & Asociados, S.L.
(86) International application number: PCT/ES2013/070692
(87) International publication number: WO 2015/052355

(57) **Abstract**

Present invention refers to a method for processing a request received in a web cache. The method is characterized by: obtaining from said request a server domain; retrieving a configuration information associated to the server domain; obtaining a path from the request; retrieving a list of actions, from the configuration information, associated to the path; filtering actions to be executed before forwarding the request to an origin server; executing filtered actions to be executed before forwarding the request to an origin server and forwarding said request; receiving a response from the origin server in the web cache; filtering actions to be executed after obtaining the response from the origin server; executing filtered actions to be executed after obtaining the response from the origin server; and finally, building a response for the request.

## Description

### TECHNICAL FIELD OF THE INVENTION

Present invention generally relates to storage methods and more specifically web caches and a method for processing the requests received based on analyzing domain-suffix and path-prefix of said requests.

### BACKGROUND OF THE INVENTION

Web caching is a multi-tenant system where different content providers subscribe and share resources from a pool of distributed machines at edge network. The temporary storage of some web documents in a web cache reduce bandwidth usage, server load and perceived lag satisfying subsequent requests of said web documents from the web cache.

The needs of every tenant differ depending on the organization of their web (or webs) and their needs for caching content of different types. These needs vary from very simple rules to complicated schemas where many parameters are taken into account. So, the configuration of such a variety of possibilities becomes a crucial part of any web caching system that aims for a broad set of customers.

The specific configuration for every tenant faces a couple of basic problems related to selecting the configuration for the tenant and then choosing the right set of actions for the request. If the number of tenants is large, selecting a configuration can be an efficiency issue with large influence in the system responsiveness. And accordingly, if the set of actions for a tenant can grow arbitrarily, another efficiency issue arises.

Apart from the action selection problem (both for the tenant and request actions) there is a second detail of importance when configuring a web caching system: the dynamic nature of the rules. There are rules that depend on the values of the request, some on the path and some on the headers. There are rules that might depend on the response codes or on the response header values. And there some that can depend on both.

Another issue appears when the number of rules is taken into account. With a big set of rules, there is a side problem of no less importance: the user friendliness of the configuration itself is difficult to keep because both the number of actions and their interoperability difficult the maintenance and understandability of the configuration.

The language of the configuration is also an aspect to be considered. Existing configuration systems rely on expressing the *how* more than the *what* (this is a common characteristic of many computer systems). Expressing the *how* has the clear advantage of non-ambiguity but it usually requires a full and deep knowledge of the system and makes it more difficult.

Current web caching systems provide a bunch of solutions, but they lack a satisfactory solution to at least one of the problems cited above. The industry described different configuration environments as the followings:
One of the solutions proposed is the **Varnish**-cache. It is a single tenant reverse-proxy designed to accelerate web applications. Its configuration system is via a set of hooks that the user can provide in a program written with a subset of C. This configuration is compiled when reloaded to the system. The configuration of a path based system is therefore entirely up to the implementation of the user. There is no mechanism to select the tenant because the system is designed for a single tenant. **Nginx** is another solution based on a web server. It changes configurations affecting different requests. There is the possibility of specifying a path-prefix selection of configurations. However, there is no way of selecting them for different tenants (selection based on host header) and the configuration is static (cannot depend on values of the response headers).

**Jaguar** is a high performance web caching product. Its configuration is via policy selection and is based in sequential evaluation of regular expressions. Its solution does not scale when either the number of tenants or the number of rules for a tenant grow.

**Squid** is another web caching system available in the prior art. Its configuration system is based in acl (access control lists) that are selected with regular expressions. The set of different acls is not organized in any way and the selection is done sequentially. This results in a non scalability problem, when dealing with many tenants and many actions and rules per tenant the system becomes inefficient.

The configuration of what to do with each request is present along all the life of the process. This complicates unnecessarily the configuration itself, since there must be many rules and actions that would only apply to a minor part of the possible request. For all the mentioned above, the prior art misses a simple, fast and satisfactory solution for configuring a web caching system.

### SUMMARY OF THE INVENTION

Present invention solves the aforementioned problems by a method for processing a request received in a web cache. The method is characterized by the following steps:
a) obtaining from said request a server domain;
b) retrieving a configuration information associated to the server domain;
c) obtaining a path from the request;
d) retrieving a list of actions, from the configuration information, associated to the path;
e) filtering actions to be executed before forwarding the request to an origin server;
f) executing filtered actions to be executed before forwarding the request to an origin server and forwarding said request;
g) receiving a response from the origin server in the web cache;
h) filtering actions to be executed after obtaining the response from the origin server;
i) executing filtered actions to be executed after obtaining the response from the origin server;
j) building a response for the request.

According to one embodiment of the invention, retrieving the configuration associated to the server domain of step b) may further comprise:
- assigning configurations to suffixes from a list of suffixes;
- matching a header of the request against the list of suffixes;
- selecting the longest matching suffix;
- retrieving the configuration assigned to the selected suffix.

And the longest matching suffix may be computed using a tree data structure where a string used as key is reversed before looked up or inserted and after being retrieved.

According to particular embodiment of the invention, the step of retrieving the list of actions associated to the path of step d) further comprises:
- assigning lists of actions to prefixes from a list of prefixes;
- matching a path of the request against the list of prefixes;
- selecting the longest matching prefix;
- retrieving the list of actions assigned to the selected prefix.

Optionally, the method of the invention may comprise that, in one of the embodiments, each action from the list of actions is associated to a Boolean expression which decides when the action is going to be executed. Thus, filters in the application of each action provide with the necessary flexibility for describing cases that depend on the response fields (headers or response code) and also on the request fields (path and headers).

Additionally, the list of action may be written in a declarative way. The declarative nature of the configuration provides an abstraction level that facilitates the user readability and hides the -sometimes difficult to follow- descriptions of how things are done.

A second aspect of the invention refers to a system for processing a request. The system comprises a web cache configured for:
a) obtaining from said request a server domain;
b) retrieving a configuration information associated to the server domain;
c) obtaining a path from the request;
d) retrieving a list of actions, from the configuration information, associated to the path;
e) filtering actions to be executed before forwarding the request to an origin server;
f) executing filtered actions to be executed before forwarding the request to an origin server and forwarding said request;
g) receiving a response from the origin server in the web cache;
h) filtering actions to be executed after obtaining the response from the origin server;
i) executing filtered actions to be executed after obtaining the response from the origin server;
j) building a response for the request.

A last aspect of the invention refers to a computer program product comprising computer program code adapted to perform the method according to any of the claims of the method when said program code is executed on a computer, a digital signal processor, a field-programmable gate array, an application-specific integrated circuit, a micro-processor, a micro-controller, or any other form of programmable hardware.

Therefore, proposed invention offers a bunch of advantages over the prior art as searching the configuration of a tenant based on host header provides a fast search algorithm for managing a large number of tenants. Enabling suffix search for domains for the tenants is an adequate and efficient solution for managing multiple subdomains for a tenant with the same configuration.

Also the prefix structure of the path-based semantics enables a fast selection algorithm that will provide an efficient way of discarding all action sets that do not apply to the request. Associating each set of actions with a path in the request tree takes the configuration closer to the user in many cases, because the web itself is usually organized taking advantage of the tree structure of the content in web servers.

Besides, the semantics of the "longest prefix" approach are simple to understand and powerful enough to express any desired behavior (within reason).

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1.- shows a request process in a typical web cache system.
Figure 2.- shows a diagram block of the process for the selection of a configuration for a particular tenant.
Figure 3.- shows a diagram block of the process for the selection of a list of actions for a particular tenant.
Figure 4.- shows a flow chart of the sequence of steps that are followed in one embodiment of proposed invention.

### DETAILED DESCRIPTION OF THE INVENTION

The invention describes a process for, in general terms, organizing the configuration of a web cache in order to efficiently select the relevant actions for a request based in two data elements from it: the domain and the path. This is based on the observation that domains correspond to tenants and that the organization of the webs themselves are path oriented (because of the path-subpath hierarchy imposed by the way ulrs are written).

In the following description, specific details are set forth to provide thorough explanation of embodiments of the present invention. But first, main concepts of proposed invention are summarized to keep a global vision all the time:
- the rules for a tenant are organized by the hosts they serve, so the hosts names are grouped to contain all rules of actions that apply to them. For instance, if a tenant serves domains "domain1.dom" and "domain2.dom", both names give access to the same configuration, if it is desired to be that way, if otherwise, each domain refers to its particular rule set;
- subdomains for a tenant are grouped (if it is so desired) under the same configuration using an efficient suffix matching algorithm. For example, in one embodiment it is used "*.domain.dom" to refer to all subdomains for "domain.dom", and they are selected efficiently with the suffix matching algorithm;
- actions to be applied to requests are organized in sets indexed by prefixes of the path of the request;
- actions are chosen lazily, and they can be discarded or taken into account depending on values of fields both coming from request and response data; and
- actions are described in a declarative manner.

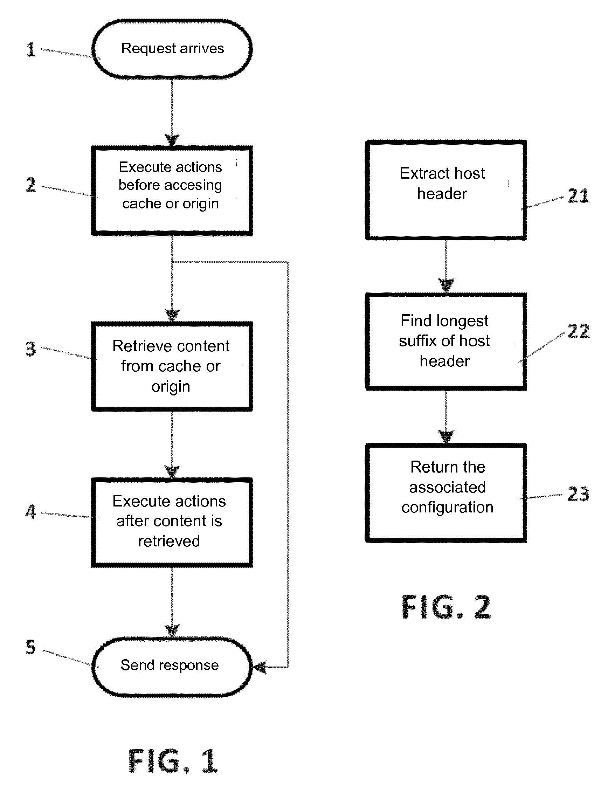

A request process in a typical web cache system can be summarized as in Figure 1. A request arrives (1) to the web caching system and then some actions are executed (2) before accessing to cache or origin. After that, the content is retrieved (3) from cache or origin and another actions are executed (4) after said content have been retrieved. Finally a response to the request is sent back from the web caching system. But these typical web cache systems keep the configuration of what to do with each request present along all the life of the process. This, as mentioned before, complicates unnecessarily the configuration itself, since there must be many rules and actions that would only apply to a minor part of the possible request.

Present invention proposes a change in this scenario, organizing the configuration in such a way that rules and actions are grouped by tenants and paths, making it easy to select efficiently a subset of the configuration that applies only to the present request.

The actions are also organized in the same way, so it is only selected a set of actions that apply to a request by action-type. Each action-type applies in different moments of the request processing. Consider the following set of actions as an example of typical procedures that might be applied in a request process:
- Deny, to reject the request
- Cache Key, to compute the key used in the cache
- Origin, to select the origin that serves the request
- Request, to modify the request sent to origin
- Response, to modify the response sent to browser
- Ttl, to define the value of the time-to-leave for the cached object
- Cache, to decide if the web cache has to cache or not

For instance, if a Deny action is executed, no other action has to be considered, Origin actions are not even taken into account when response is obtained from the cache store, Response is not built until the origin replies or the data is retrieved from the cache. These are examples of "lazy" evaluation of actions.

Next, it is described, according to a particular embodiment of the invention, a possible configuration example and provided a detailed description for it:

| |
|---|
| *.domain.com,*seconddomain.com |
| / |
| Origin('1.2.3.4', 8080) |
| Ttl(1h) |
| /main |
| Origin('2.3.4.5', 9090, Path EndsWith '.htm') |
| Ttl(30m) |
| * |
| / |
| Deny() |

In this example it is shown how the rules are grouped by paths and then by domains. Domains are grouped in two: *.domain.com and *seconddomain.com in one group and * in the other group. Obviously, the * is a catch-all rule. Then in the first group there are two sets of actions, one indexed with / and the other with /main. So, a request to www.domain.com/main.html would go to server in ip '1.2.3.4' and have a cache life of half an hour, however a request to www.domain.com/main.htm (without the 'I') would go to origin in '2.3.4.5'. Any request to another path that does not start with /main will go to '1.2.3.4' and have a cache life of one hour. Requests to all other domains would be denied because of the * domain rules.

The first partial problem to solve is the selection of the configuration for a particular tenant. The user organizes the tenants associating their configuration to suffixes of domains. For instance, according to particular embodiment, a tenant could be associated to *www.origin.com* (tenant A) and another (B) to **.origin.com* (all domains that end with *.origin.com*). This process is schematically shown in figure 2, where, according to one embodiment of the invention, the selection process extracts the host header (21) and then chooses the most specific suffix (the longest matching suffix 22) of the *host* header value and proceeds returning the associated configuration (23). In the previous example, a request with header *"host: www.origin.com"* would call for configuration of tenant A and a request with header *"host: images.origin.com"would* be associated to tenant B.

The computation of the longest suffix can be done efficiently, according to one embodiment of the invention, with a tree data structure where the string used as a key is reversed before looked up or inserted and after being retrieved.

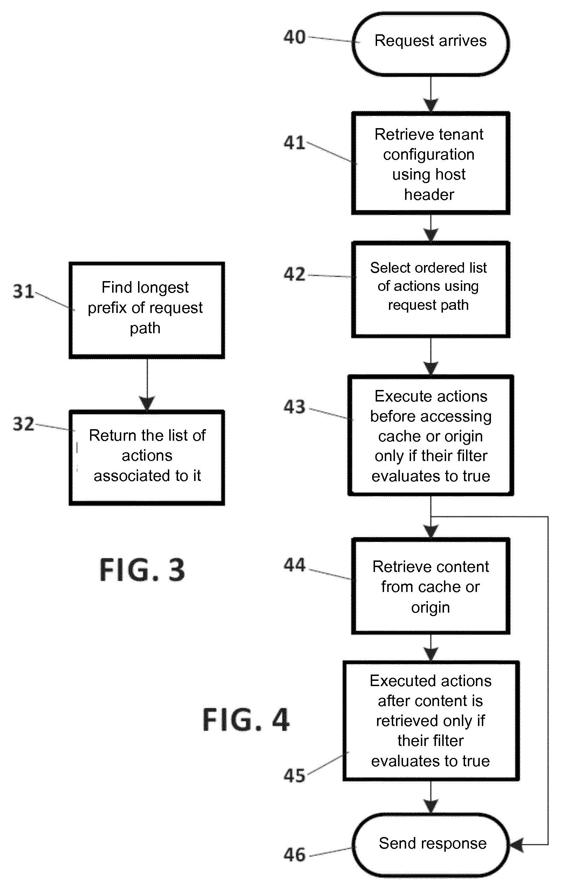

A similar processing is carried out to solve a second partial problem and selecting a set of actions. However, in this case the path of the request is used (instead of the *host* header) and the longest matching prefix is computed (instead of longest suffix). In this case, a standard tree structure suffices without the need of reversing the key. The set of actions associated to a path prefix may apply only to any request that starts with that same prefix and never to requests that fail in the prefix test. In the flow-chart schema of figures 3 it is shown this process, which basically comprises two steps: finding the longest prefix of the request path (31) and then returning the list of actions associated to it (32).

For instance, if a set of actions A is associated with "/resources/images/gif", any request path starting with path "/resources/images/gif" will be considered to be evaluated with A and all requests whose path does not start with "/resources/images/gif" will never be considered together with actions A.

When different prefixes may apply to the same request, the longest prefix is chosen. So, for instance, there can be different actions for "/" (root), or for "/images", or another for "/resources/css/common/", and a more specific set of actions for "/images/jpeg/hires/".

In one particular embodiment of the invention, filters are included as an optional element. Thus, each action is guarded with a Boolean expression that in turn might depend on request and response fields (headers, path and response codes). An action that is not guarded with a filter is equivalent to an action guarded with a Boolean expression that always evaluates to true.
The expression in the filter is evaluated when the action is going to be taken into account (not before). If the result is true, the action is executed and next actions of the same kind are ignored. If, otherwise, the result is false, the action is ignored and the processing of same-kind actions continues.

For example, if a Ttl action is only applicable to requests that contain a particular header, the corresponding rule will be guarded with a filter according to that.

As it has been mentioned before, actions are expressed in a declarative way. Declarative programming is a style of building the structure and elements of computer programs, which expresses the logic of a computation without describing its control flow. That is, the actions express what will be done but not how nor when. This is in contrast with imperative programming, in which algorithms are implemented in terms of explicit steps.

For instance, a Ttl (Time to leave) action expresses which time-to-leave value will be set, a Deny action specifies which requests will be answered with a HTTP code 403 (forbidden), etc.

It is decided at every point in the request/response cycle, what actions make sense. And among those, filters the ones that apply, and chooses the first one of them. This means, for instance, that Deny actions are considered at the beginning of the request processing but this is not specified as such by the user writing the configuration, it is a property of the configuration system itself. Another example is a Ttl action, it is only considered once the response is received and the configuration has labeled it as "cacheable". However, the user does not need to do anything to enforce those behaviours because they are inherent to proposed invention.

The actions (the *what*) are compiled into internal instructions (the *how*), which behave as specified by the definitions of said actions. For example, a Deny action is translated into code that builds a response with http response code 403 (forbidden), no body and with no additional header.

This provides the system with an abstraction level that serves two purposes: a user-friendly configuration language and a potential optimization step when putting together all actions.

This is innovative in this environment: rule systems for web caching. The rule system does not require the user knowing anything about the order nor the moment nor how the actions are considered nor applied.

Figure 4 shows a flow chart of the sequence of steps that are followed in one embodiment of proposed invention. The three basic elements of the invention are explained:
1. The suffix based selection of the rules that apply to the host in the request, which corresponds to step 41.
2. The prefix based selection of the rules from the path of the request, which corresponds to step 42.
3. The consideration of each type of action in the precise moment that is needed (lazy evaluation) and not before, which corresponds to steps 43, 44, 45.

Thus, before sending a response (46) to the request (40), the configuration for a specific tenant is retrieved using the host header (41), an ordered list of action is selected using the request path (42) and then, the actions from the selected list are executed (43) before accessing cache or origin (in the case of filters are included, the Boolean associated to each action must be evaluated to true). Next step may be directly sending the response (46) to the original request or it may be retrieving (44) content from cache or origin and execute (45) other actions after said content is retrieved (once again, if filters are included the Boolean associated to each action must be evaluated to true.)

Proposed invention, as a method for configuring a web caching system, may be implemented, according to one embodiment in the initial part of the pipeline that reads requests in any web caching system. Thus, as soon as the request headers are read the method of proposed invention starts acting, making it even more efficient, since there is no need of waiting for the full request (may it have body). However, the method can be used in any place where there is an http request and there are decisions to be taken depending on the host and path of the request. For instance in a corporate transparent proxy where some contents or some origins have to be processed specially (or blocked).

## Claims

1. Method for processing a request received in a web cache, the method is **characterized by** the following steps:
k) obtaining from said request a server domain;
l) retrieving a configuration information associated to the server domain;
m) obtaining a path from the request;
n) retrieving a list of actions, from the configuration information, associated to the path;
o) filtering actions to be executed before forwarding the request to an origin server;
p) executing filtered actions to be executed before forwarding the request to an origin server and forwarding said request;
q) receiving a response from the origin server in the web cache;
r) filtering actions to be executed after obtaining the response from the origin server;
s) executing filtered actions to be executed after obtaining the response from the origin server;
t) building a response for the request.

2. Method according to claim 1 wherein retrieving the configuration associated to the server domain of step b) further comprising :
- assigning configurations to suffixes from a list of suffixes;
- matching a header of the request against the list of suffixes;
- selecting the longest matching suffix;
- retrieving the configuration assigned to the selected suffix.

3. Method according to claim 2 further comprising computing the longest matching suffix using a tree data structure where a string used as key is reversed before looked up or inserted and after being retrieved.

4. Method according to any one of the previous claims wherein retrieving the list of actions associated to the path of step d) further comprising:
- assigning lists of actions to prefixes from a list of prefixes;
- matching a path of the request against the list of prefixes;
- selecting the longest matching prefix;
- retrieving the list of actions assigned to the selected prefix.

5. Method according to any of the previous claims wherein each action from the list of actions is associated to a Boolean expression which decides when the action is going to be executed.

6. Method according to any one of the previous claims wherein the list of actions are written in a declarative way.

7. System for processing a request **characterized by** comprising a web cache configured for:
k) obtaining from said request a server domain;
l) retrieving a configuration information associated to the server domain;
m) obtaining a path from the request;
n) retrieving a list of actions, from the configuration information, associated to the path;
o) filtering actions to be executed before forwarding the request to an origin server;
p) executing filtered actions to be executed before forwarding the request to an origin server and forwarding said request;
q) receiving a response from the origin server in the web cache;
r) filtering actions to be executed after obtaining the response from the origin server;
s) executing filtered actions to be executed after obtaining the response from the origin server;
t) building a response for the request.

8. A computer program product comprising computer program code adapted to perform the method according to any of the claims 1-6 when said program code is executed on a computer, a digital signal processor, a field-programmable gate array, an application-specific integrated circuit, a micro-processor, a micro-controller, or any other form of programmable hardware.
